# EUROPÄISCHE PATENTSCHRIFT

(11) **EP 0 804 986 B1**
(45) Veröffentlichungstag und Bekanntmachung des Hinweises auf die Patenterteilung: **18.10.2000**
(21) Anmeldenummer: 97107298.8
(22) Anmeldetag: 02.05.1997
(51) Int. Cl.: B23B 51/10, B23K 11/30

(54) **Schneidelement**
Cutting element
Elément de coupe

(30) Priorität: 02.05.1996 DE 29607927 U
(43) Veröffentlichungstag der Anmeldung: 05.11.1997
(73) Patentinhaber: Koch, Walter, 44287 Dortmund (DE)
(72) Erfinder: Koch, Walter, 44287 Dortmund (DE)
(74) Vertreter: Patentanwälte Wenzel & Kalkoff

(56) Entgegenhaltungen:
- GB-A- 984 610
- GB-A- 2 279 600
- US-A- 4 892 448
- US-A- 4 966 506
- PATENT ABSTRACTS OF JAPAN vol. 11, no. 372 (M-648) [2819] , 4.Dezember 1987 & JP 62 144885 A (YOKOTA), 26.Juni 1987,

## Beschreibung

Die Erfindung betrifft ein Schneidelement für eine Spanneinrichtung insbesondere zum Zerspanen von Werkstücken aus Metall oder Kunststoff, bestehend aus einem länglichen Körper mit
- mindestens einem Schneidteil mit mindestens einer Hauptschneide,wobei das Schneidteil mindestens eine Spanfläche und mindestens eine Freifläche umfaßt und die Hauptschneide des Schneidteils jeweils an der Kante von aneinander angrenzenden Spanflächen und Freiflächen gebildet ist und
- mindestens einem mit dem Schneidteil einstückig verbundenen Klemmteil zum Spannen des Schneidelements in der Spanneinrichtung
sowie eine Spanneinrichtung für ein derartiges Schneidelement.

Die GB-A-2279 600 zeigt ein Schneidelement mit allen Merkmalen des Oberbegriffs des Anspruchs 1. Weiter weist dieses Schneidelement Schneidkanten 106c, 106d und 106e auf, die jeweils gerade sind (vgl. Figur 3 i.V.m. Seite 6), und an die jeweils ebene Spanflächen 106c1 bzw. 106d1 (vgl. Figuren 6 und 7), sowie Freiflächen 106c2 bzw. 106d2 anschließen. Die Freiwinkel sind nicht definiert.

Bei spanenden Verfahren mit Schneidelementen der angegebenen Art werden von einem zu bearbeitenden Werkstück Stoffteilchen (Späne) auf mechanischem Wege abgetrennt, um bestimmte Werkstückformen, Werkstücktoleranzen und Werkstückoberflächen zu erreichen. Das Abtrennen der Späne vom Werkstück erfolgt durch das in seiner Form eindeutig geometrisch bestimmte Schneidteil. Dieses Schneidteil ist der im Zerpanungsprozeß aktive Teil des Werkzeugs. Im rechtwinkligen Bezugssystem ergeben sich die für den Zerpanungsprozeß wichtigen Werkzeugwinkel, nämlich Freiwinkel α und Spanwinkel γ. Zusammen mit dem zwischen Freiwinkel α und Spanwinkel γ liegenden Keilwinkel β ergibt die Summe aller Winkel immer 90°. Die Flächen, über die der Span während des Bearbeitungsprozesses abläuft, werden Spanflächen genannt, diejenigen, die der Spanfläche gegenüber angeordnet sind, nennt man Freiflächen. Die Durchdringung der Ebenen von Span- und Freifläche - also deren gemeinsame Kante - wird aufgrund ihrer Funktion auch Hauptschneide genannt. Mit dieser Hauptschneide wird das Werkstück bearbeitet.

In der Regel werden zum spanenden Bearbeiten von Werkstücken aus Metall oder Kunststoff Wendeschneidplatten in den unterschiedlichsten Formen verwendet. Auch sie weisen alle die beschriebenen Merkmale auf. Es handelt sich dabei um drei- oder mehreckige, oder auch im Querschnitt runde Schneidelemente, die entweder an einem Ende oder über eine im Schneidelement vorgesehene Bohrung in einer Spanneinrichtung gehalten werden. Für die Bearbeitung des Werkstücks ist es entweder erforderlich, daß das Werkstück stillsteht und das Werkzeug sich um seine Rotationsachse dreht, oder das Werkzeug stillsteht und das Werkstück sich um seine Rotationsachse dreht.

Beim Stirn- oder Plandrehen eines Werkstücks wird bisher das zu bearbeitende Werkstück relativ zu dem Werkzeug (Schneidelement) in Drehung versetzt. Dabei wird abhängig vom Material des Werkzeugs und des Werkstücks das Werkzeug (Schneidelement) in Richtung der Rotationsachse des Werkzeugs zugestellt und zwar solange, bis die gewünschte Länge bzw. Form oder Oberfläche des Werkstücks erreicht ist. Nach Abschluß des Drehvorganges bleibt jedoch im Bereich der Rotationsachse immer ein Pickel stehen, der auch durch einen weiteren Drehvorgang nicht entfernt werden kann.

Sollte es aus technischen oder ästhetischen Gründen notwendig sein, diesen Pickel zu entfernen, so sind weitere kostenintensive Nacharbeiten, möglicherweise sogar von Hand notwendig.

Es besteht daher die Aufgabe, ein Schneidelement und eine Spanneinrichtung für das Schneidelement zur Verwendung in einer Vorrichtung zum Zerpanen von Werkstücken aus Metall oder Kunststoff zu schaffen, mit dem der Nachteil des Standes der Technik vermieden wird.

Erfindungsgemäß wird die Aufgabe dadurch gelöst, daß
- die Spanfläche des Schneidteils durch eine Fläche einer in mindestens einer Seitenfläche des Schneidelements vorgesehenen im wesentlichen bogenförmigen Ausnehmung gebildet ist und
- die Freifläche des Schneidteils von der jeweiligen Hauptschneide um einen vom zu bearbeitenden Material abhängigen Winkel nach unten geneigt ist.

Ferner wird als Lösung der Aufgabe eine Spanneinrichtung zur Verwendung für eine Vorrichtung zum Zerspanen von Werkstücken aus Metall oder Kunststoff mit dem erfindungsgemäßen Schneidelement vorgeschlagen, wobei
- die Spanneinrichtung zwei oder mehr Klemmbacken umfaßt, die das Schneidelement im Bereich des Klemmteils des Schneidelements spannen und
- das Schneidelement im gespannten Zustand in der Spanneinrichtung so angeordnet ist, daß das Schneidteil des Schneidelements im Bereich einer in der Spanneinrichtung vorgesehenen Öffnung für die Aufnahme des zu bearbeitenden Werkstücks angeordnet ist.

Der wesentliche Vorteil der Erfindung liegt darin, daß mit Hilfe des Schneidelements Werkstücke in einem einzigen Bearbeitungsprozeß bearbeitet werden können, ohne daß im Bereich der Rotationsachse des zu bearbeitenden Werkstücks der bisher übliche Pickel aus der im übrigen plan bearbeiteten Fläche übersteht.

Der weitere Vorteil des erfindungsgemäßen Schneidelements ist darin zu sehen, daß es sehr kostengünstig herstellbar ist. Denn das Schneidelement besteht vorzugsweise aus Stangenmaterial, vorzugsweise aus einem rechteckigen Profil, das nach der Grundbearbeitung, nämlich Ablängen, Bearbeiten (Erodieren) der Ausnehmungen und Anschleifen der Freiflächen nur noch einem Härtungsprozeß unterzogen werden muß. Eine weitere Bearbeitung ist im Gegensatz zu herkömmlichen Schneidmaterialien, wie beispielsweise Wendeschneidplatten, nicht notwendig.

Vorzugsweise besteht das Schneidelement aus einem Schneidteil mit zwei an von einander abgewandten Seiten des Schneidteils gegeneinander versetzt angeordneten bogenförmigen Ausnehmungen und aus an den Enden des Schneidteils angeordneten Klemmteilen, so daß der Schwerpunkt des Schneidelements dem Schnittpunkt der Freiflächen des Schneidteils entspricht. Die im wesentlichen bogenförmigen Ausnehmungen sind in Bezug auf den Schwerpunkt des Schneidelements punktsymmetrisch angeordnet.

Das Schneidelement eignet sich besonders für die Bearbeitung sphärischer Werkstücke. Denn aufgrund der zueinander auf einer nämlich der höchsten Ebene versetzt angeordneten Hauptschneiden und der jeweils gegenläufigen Freiflächen zeigt sich überraschenderweise, daß dann das zu bearbeitende Werkstück selbstätig zentriert wird, wenn sich das Schneidelement um seine Rotationsachse dreht, die durch den Punkt verläuft, an dem sich die beiden Freiflächen schneiden (sinnvollerweise die Mitte und der Schwerpunkt des Schneidelements).

Die Spanneinrichtung für das erfindungsgemäße Schneidelement ist sehr einfach aufgebaut. Sie besteht im wesentlichen aus zwei Klemmbacken, wobei die Klemmbacken Ausnehmungen aufweisen, die die jeweiligen Klemmteile des Schneidelements aufnehmen und diese Klemmteile im montierten Zustand der Spanneinrichtung einschließen, so daß das Schneidelement lagegerecht in der Spanneinrichtung positioniert ist.

Vorteilhafterweise wird das Schneidelement so in der um eine Rotationsachse drehenden Spanneinrichtung gehalten, daß der Schwerpunkt des Schneidelements auf der Rotationsachse der Spanneinrichtung liegt und die Rotationsachse senkrecht zur Längserstreckung des Schneidelements verläuft.

Die Spanneinrichtung selbst ist vorzugsweise Bestandteil einer Vorrichtung zum Zerspanen von Werkstücken aus Metall oder Kunststoff. Die erfindungsgemäße Spanneinrichtung mit dem neuen Schneidelement läßt sich besonders vorteilhaft in eine Vorrichtung zum mechanischen Entfernen von Ablagerungen an Schweißelektroden einsetzen, wie sie in der DE-GM 94 14 151.7 der Anmelder beschrieben ist. So können Ablagerungen, die beim Schweißen entstehen und sich an der Schweißelektrode im Bodenbereich ablagern, auf einfache Weise entfernt werden. Denn für die Erzielung qualitativ hochwertiger Schweißnähte ist es wichtig, daß die Schweißelektroden besonders in ihrem Bodenbereich, der mit dem zu schweißenden Material in Berührung kommt, plan sind, d.h. keinerlei Pickel aufweisen sollten.

Ein weiterer wesentlicher Vorteil des Schneidelements und der Spanneinrichtung für dieses Schneidelement ist, daß mit einem einzigen Schneidelement zwei Werkstücke gleichzeitig bearbeitet werden können. Dies wird dadurch ermöglicht, daß zum einen das Schneidelement vier Hauptschneiden aufweist, die durch die auf den verschiedenen Seiten des Profils angeordneten und zueinander versetzten im wesentlichen bogenförmigen Ausnehmungen gebildet werden, wobei jeweils zwei Hauptschneiden auf einer Seite des Schneidelements vorhanden sind. Zum anderen sind bei der Spanneinrichtung zwei sich gegenüberliegende im Bereich der Rotationsachse der Spanneinrichtung angeordnete Öffnungen vorgesehen, die den gleichzeitigen Zugang der zu bearbeitenden Werkstücke ermöglichen.

Die Spanneinrichtung mit dem Schneidelement läßt sich beliebig mit anderen Bearbeitungsprozessen kombinieren. Beispielsweise ist diese Spanneinrichtung mit dem Schneidelement in den Bearbeitungskopf der bereits genannten Vorrichtung der Anmelderin einsetzbar, ohne daß auf die dort bereits vorgesehenen weiteren Schneidelemente verzichtet werden muß. Somit ist eine gleichzeitige Bearbeitung einer Schweißelektrode im Boden- und Seitenbereich möglich. Je nach Anwendungsfall steht es dem Nutzer frei, entweder eine Vorrichtung mit einer kombinierten Boden- und Seitenbearbeitung auszustatten, oder er trifft die Wahl, ausschließlich den Boden einer Schweißelektrode oder nur die Seiten zu bearbeiten.

Die Anwendung eines solchen Schneidelements ist entsprechend vielseitig. Es ist überall dort einsetzbar, wo aus technischen und/oder ästhetischen Gründen eine plane Oberfläche eines Werkstücks ohne einen Pickelüberstand benötigt wird.

Weitere vorteilhafte Ausgestaltungen der Erfindung gehen aus den Unteransprüchen und der nachfolgenden Beschreibung hervor.

Ausführungsbeispiele der Erfindung werden nachstehend anhand von Zeichnungen erläutert. Es zeigen:

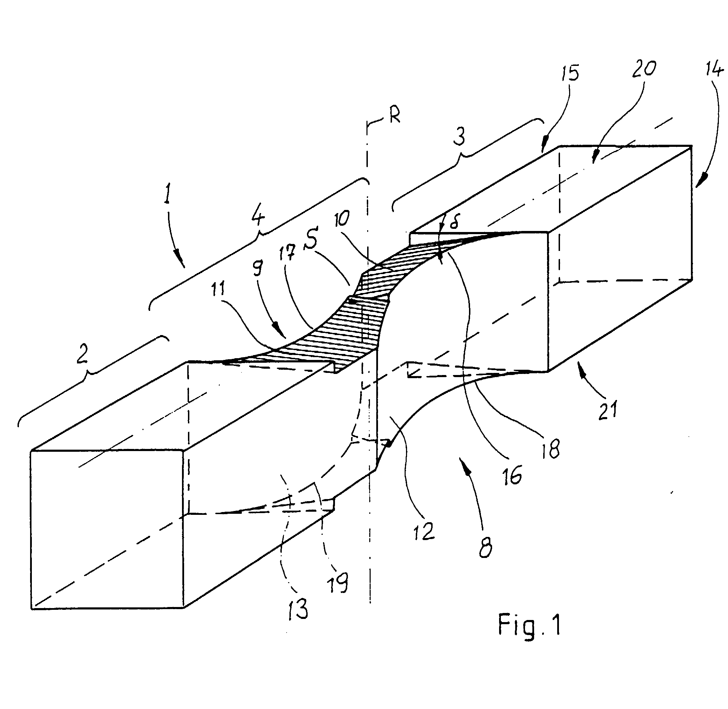

- Fig. 1: eine perspektivische Ansicht eines ersten Ausführungsbeispiels eines Schneidelements;

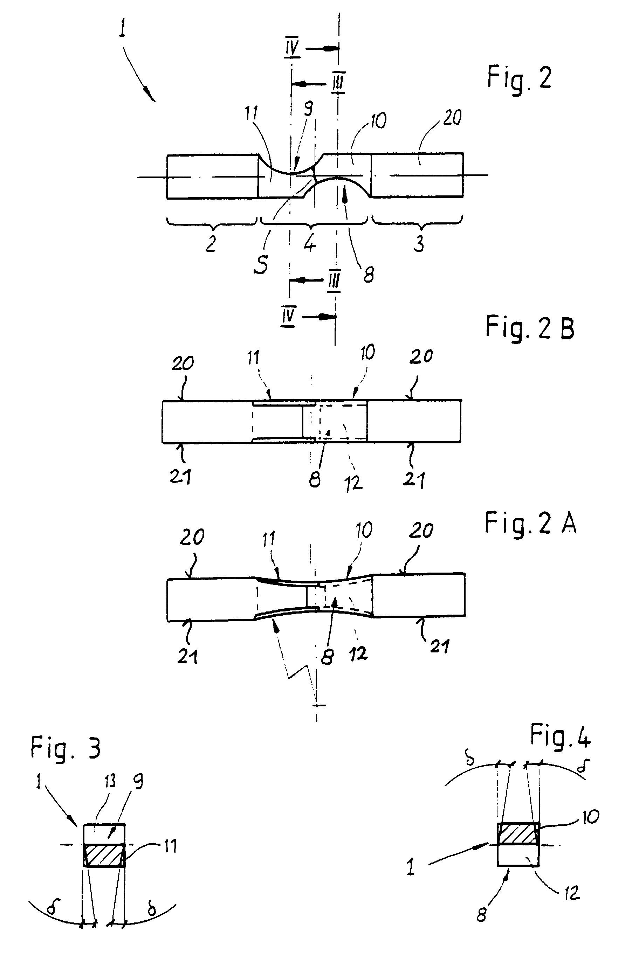

- Fig. 2: eine Draufsicht auf das Schneidelement gemäß Fig. 1;
- Fig. 2A: eine Längsseitenansicht des Schneidelementes nach Fig. 1 mit bogenförmigen Freiflächen;
- Fig. 2B: eine Längsseitenansicht einer alternativen Ausführungsform des Schneidelementes nach Fig. 1 mit eben durchlaufenden Freiflächen;
- Fig. 3: einen Schnitt durch das Schneidelement gemäß Fig. 2, entlang einer Linie III-III;
- Fig. 4: einen Schnitt durch das Schneidelement gemäß Fig. 2, entlang einer Linie IV-IV;

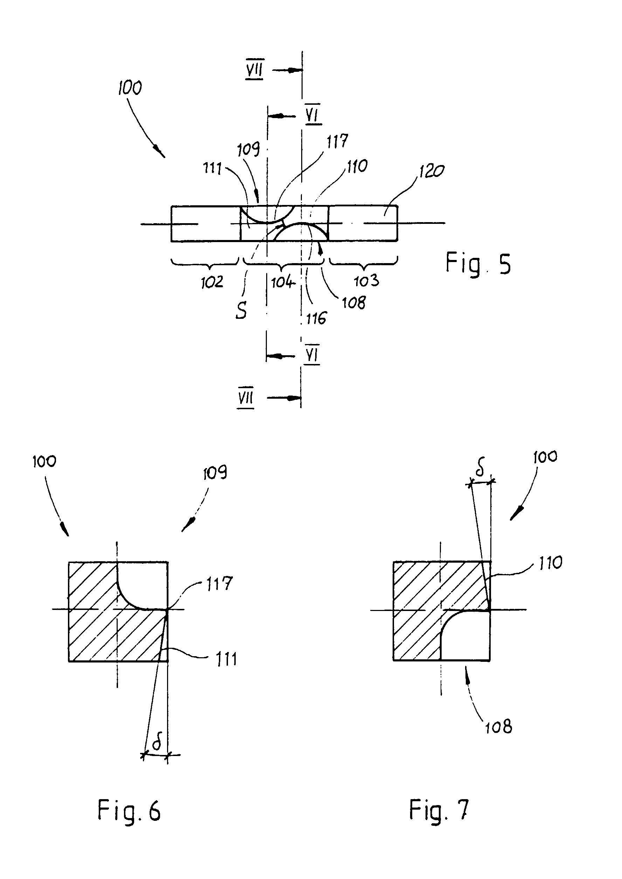

- Fig. 5: eine Draufsicht auf ein zweites Ausführungsbeispiel eines Schneidelements;
- Fig. 6: einen Schnitt durch das Schneidelement gemäß Fig. 5, entlang einer Linie VI-VI;
- Fig. 7: einen Schnitt durch das Schneidelement gemäß Fig. 5, entlang einer Linie VII-VII;

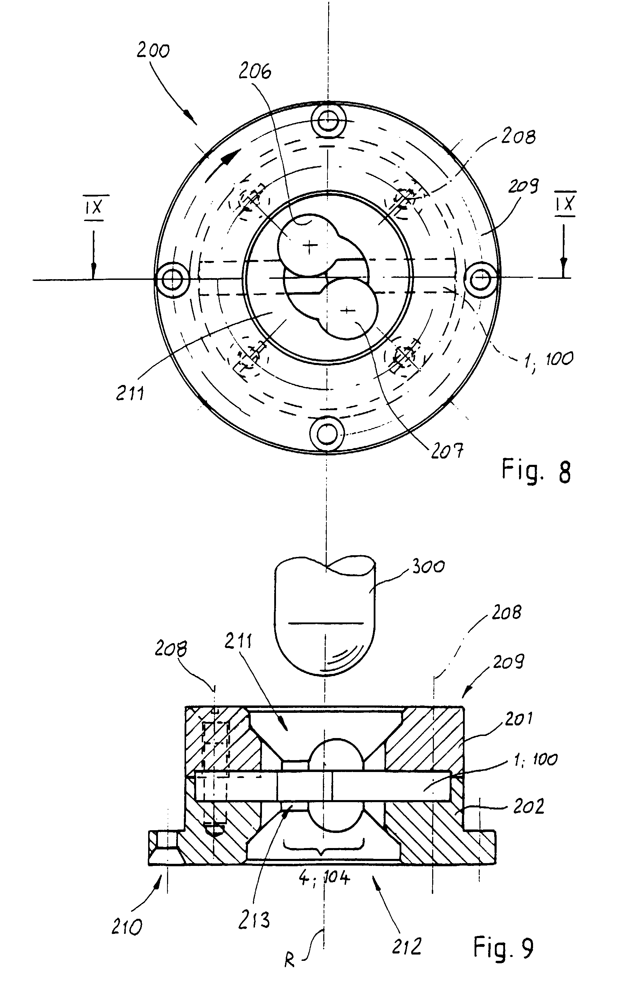

- Fig. 8: eine Draufsicht auf eine Spannvorrichtung mit einem Schneidelement gemäß Fig. 1;
- Fig. 9: einen Schnitt durch die Spannvorrichtung gemäß Fig. 8, entlang einer Linie IX-IX.

Das erfindungsgemäße Schneidelement 1, 100 besteht im wesentlichen aus mindestens einem Schneidteil und mindestens einem Klemmteil.

Bei einem ersten Ausführungsbeispiel, wie es in den Fig. 1-4 dargestellt ist, umfaßt das Schneidelement 1 ein Schneidteil 4 und jeweils zu den Seiten des Schneidteils 4 angeordnete Klemmteile 2, 3, wobei das Schneidelement 1 selbst aus einem langgestreckten rechteckigen Profil besteht. Das Schneidteil 4 umfaßt insgesamt vier Hauptschneiden 16, 17, 18, 19, wobei jeweils zwei Hauptschneiden 16, 17 und 18, 19 in einer Ebene angeordnet sind. Die Hauptschneiden 16, 17, 18, 19 entstehen an den Kanten einander angrenzender Freiflächen 10, 11 und Spanflächen 12, 13 und liegen in der Ebene der Oberseiten 20, 21 der Klemmteile 2, 3, so daß zwischen den Oberseiten 20, 21 und den Freiflächen 10, 11 Stufen mit stark spitzwinkliger Fläche entstehen.

In dem gezeigten Ausführungsbeispiel entstehen die Spanflächen 12, 13 des Schneidelements 1 durch Herstellen einer im wesentlichen bogenförmigen Ausnehmung 8, 9 in den Seitenflächen 14, 15 des in Fig. 1 dargestellten Schneidelements 1, wobei die Spanflächen 12, 13 der Bogenfläche entsprechen. Dabei sind die im wesentlichen bogenförmigen Ausnehmungen 8, 9 über den ganzen Profilquerschnitt des Schneidteils 4 vorgesehen.

Die Freifläche 10, 11 wird durch Anschleifen der Oberseite 20, 21 hergestellt, wobei eine zulässige Rauhtiefe von max. 0,1 µm nicht überschritten werden sollte.

Vorzugsweise beträgt die Neigung der Freifläche 2°, und zwar ausgehend von der jeweiligen Hauptschneide 16, 17, 18, 19 schräg nach unten geneigt. In Abhängigkeit von dem zu bearbeitenden Material kommt ein Winkel im Bereich von etwa 2° bis 4° in Betracht; jedoch sind auch größere Neigungswinkel denkbar.

Vorzugsweise sind die beiden im wesentlichen bogenförmigen Ausnehmungen 8, 9 versetzt zueinander angeordnet. Dies bedeutet, daß die eine Ausnehmung 8 in der einen Seitenfläche 14 zu der anderen Ausnehmung 9 auf der anderen Seitenfläche 15 so angeordnet ist, daß die Hauptschneiden 16, 17 und 18, 19 vom Mittelpunkt des Schneidelements 1, der gleichzeitig den Schwerpunkt S des Schneidelements 1 bildet, im selben Abstand entfernt sind. Zusätzlich sind die Hauptschneiden 16, 17 zu den Hauptschneiden 17, 18 punktsymmetrisch in Bezug auf den Schwerpunkt S angeordnet.

Um eine selbsttätige Zentrierung des zu bearbeitenden Werkstücks während des Bearbeitungsprozesses zu gewährleisten, sind die Freiflächen 10, 11 bogenförmig so gestaltet, daß deren Schnittpunkt dem Schwerpunkt S des Schneidelements 1 entspricht, wobei vorausgesetzt wird, daß die Rotationsachse R des Schneidelements 1 den Schwerpunkt S senkrecht zur Längserstreckung des Schneidelements, also senkrecht zur Oberseite 20, 21 durchdringt.

Das erste Ausführungsbeispiel des Schneidelements 1 eignet sich entweder dafür, zwei Werkstücke gleichzeitig, d.h. jeweils mit den Hauptschneiden 16, 17 und 18, 19 zu bearbeiten, oder, falls nur ein Werkstück bearbeitet wird, nach Verschleiß der einen Hauptschneiden 16, 17 das Schneidelement 1 um 180° zu drehen, so daß die weiteren Hauptschneiden 18, 19 zum Einsatz kommen.

In einer alternativen Ausführungsform des Schneidelementes, die in einer Längsseitenansicht in Fig. 2B gezeigt ist, wird auf bogenförmige Freiflächen 10, 11 verzichtet, so daß die Freiflächen 10, 11 jeweils mit ihrer höchsten Kante, von der aus sie schräg abfallen, eine Ebene mit den Oberseiten 20 bzw. 21 bilden.

Das zweite Ausführungsbeispiel eines Schneidelements 100, das in den Fig. 5-7 dargestellt ist, unterscheidet sich von dem ersten Ausführungsbeispiel dadurch, daß die im wesentlichen bogenförmigen Ausnehmungen 108, 109 sich nicht über den gesamten Profilquerschnitt erstrecken. Dies führt dazu, daß dieses Schneidelement 100 nur zwei Hauptschneiden 116, 117 aufweist. Dieses Schneidelement 100 findet vor allem dann Anwendung, wenn bei dem Zerspanungsprozeß nur kurze Späne entstehen. In den Fig. 5-7 sind im wesentlichen die Bezugszeichen der Fig. 2-4 übernommen worden, jedoch mit dem Unterschied einer um die Zahl 100 größeren Bezugszeichennummer, um kenntlich zu machen, daß es sich gegenüber den Fig. 2-4 um ein anderes Ausführungsbeispiel handelt.

Zur Bearbeitung eines Werkstücks 300 (vgl. Fig. 9) ist es erforderlich, daß das Schneidelement 1, 100 in einer Spanneinrichtung 200, wie sie in den Fig. 8 und 9 gezeigt ist, positionsgerecht gehalten wird. Diese Spanneinrichtung 200 eignet sich zum Einsetzen in eine Vorrichtung, die einen Antrieb für die Spanneinrichtung 200 vorsieht, so daß die Spanneinrichtung 200 um ihre Rotationsachse R gedreht wird.

Die im wesentlichen zylindrische Spanneinrichtung 200 selbst besteht bei einem Ausführungsbeispiel aus zwei sich gegenüberliegenden Klemmbacken 201, 202, die im gespannten Zustand das Schneidelement 1,100 zwischen sich einschließen. Die Klemmspannung wird durch auf dem Umfang der Spanneinrichtung 200 verteilt angeordnete Spannschrauben 208 erreicht, die sowohl die eine Klemmbacke 201 als auch die andere Klemmbacke 202 durchdringen.

Das Schneidelement 1, 100 ist vorzugsweise so positioniert, daß der Schwerpunkt S des Schneidelements 1, 100 auf der Rotationsachse R der Spanneinrichtung 200 liegt.

Auf seiner Oberseite 209 und vorzugsweise auch auf seiner Unterseite 210 weist die Spanneinrichtung 200 jeweils eine trichterförmige Öffnung 211, 212 mit einem Trichtergrund 213 auf, die dem zu bearbeitenden Werkstück 300 den Zugang zum Schneidelement 1, 100 ermöglicht. Diese trichterförmige Öffnung 211, 212 ist so gestaltet, daß im Trichtergrund 213 eine Bohrung vorgesehen ist, die zum einen dem äußeren Profil des Schneidteils 4, 104 des Schneidelements 1, 100 entspricht und zum anderen so dimensioniert ist, daß die während des Bearbeitungsprozesses anfallenden Späne problemlos abgeführt werden können. Weitere zusätzliche Bohrungen 206, 207 im Trichtergrund 213, wie sie in den Fig. 8 und 9 dargestellt sind, fördern die Spanabfuhr.

Vorzugsweise ist die sich zum Trichtergrund 213 verjüngende Wandung so gestaltet, daß sie der Negativ-Form des zu bearbeitenden Werkstücks 300 entspricht. Dies hat den Vorteil, daß ein maßgenaue Zustellung des Werkstücks 300 in Richtung des Schneidelements 1, 100 nicht erforderlich ist, denn das Werkstück 300 wird solange bearbeitet, bis es an der Wandung aufliegt. Danach ist eine weitere Zustellung des zu bearbeitenden Werkstücks 300 in Richtung des Schneidelements 1, 100 nicht mehr möglich.

Für die Aufnahme des erfindungsgemäßen Schneidelements 1, 100 ist jede Art von Spanneinrichtung denkbar, die entweder das Schneidelement positionsgerecht hält, wobei sich das zu bearbeitende Werkstück relativ hierzu dreht, oder aber -wie beschrieben- die Spanneinrichtung mit dem Schneidelelement sich gegenüber dem stillstehenden Werkstück dreht.

## Patentansprüche

1. Schneidelement für eine Spanneinrichtung, insbesondere zum Zerspanen von Werkstücken aus Metall oder Kunststoff, bestehend aus einem länglichen Körper mit
- mindestens einem Schneidteil mit mindestens einer Hauptschneide, wobei das Schneidteil mindestens eine Spanfläche und mindestens eine Freifläche umfaßt und die Hauptschneide des Schneidteils jeweils an der Kante von aneinander angrenzenden Spanflächen und Freiflächen gebildet ist und
- mindestens einem mit dem Schneidteil einstückig verbundenen Klemmteil zum Spannen des Schneidelements in der Spanneinrichtung,
dadurch **gekennzeichnet**, daß
- die Spanfläche (12, 13; 112; 113) des Schneidteils (4; 104) durch eine Fläche einer in mindestens einer Seitenfläche (14, 15; 114, 115) des Schneidelements (1, 100) vorgesehenen im wesentlichen bogenförmigen Ausnehmung (8, 9; 108, 109) gebildet ist und
- die Freifläche (10, 11; 110, 111) des Schneidteils (4, 104) von der jeweiligen Hauptschneide (16, 17, 18, 19; 116, 117) um einen vom zu bearbeitenden Material abhängigen Winkel (δ) von mindestens ca. 2° bis ca. 4° nach unten geneigt ist.

2. Schneidelement nach Anspruch 1, dadurch **gekennzeichnet**, daß die bogenförmigen Ausnehmungen (8, 9; 108, 109) den gesamten Profilquerschnitt des Schneidteils (4; 104) erfassen.

3. Schneidelement nach Anspruch 1, dadurch **gekennzeichnet**, daß die bogenförmigen Ausnehmungen (108, 109) einen Teil des Profilquerschnitts des Schneidteils (104) erfassen.

4. Schneidelement nach einem der Ansprüche 1 - 3, dadurch **gekennzeichnet**, daß das Schneidteil (4; 104) zwei sich gegenüberliegende bogenförmige Ausnehmungen (8, 9; 108,109) aufweist.

5. Schneidelement nach einem der Ansprüche 1 - 4, dadurch **gekennzeichnet**, daß die bogenförmigen Ausnehmungen (8, 9, 108, 109) zueinander versetzt angeordnet sind.

6. Schneidelement nach Anspruch 5, dadurch **gekennzeichnet**, daß die Hauptschneiden (16, 17, 18, 19) vom Schwerpunkt (S) des Schneidelements (1, 100) im gleichen Abstand angeordnet sind.

7. Schneidelement nach Anspruch 6, dadurch **gekennzeichnet**, daß die Ausnehmungen (8, 9; 108, 109) punktsymmetrisch zum Schwerpunkt (S) des Schneidelements (1; 100) angeordnet sind.

8. Schneidelement im wesentlichen nach den Ansprüchen 1, 6 und 7, dadurch **gekennzeichnet**, daß die Freiflächen (10, 11) bogenförmig oder eben verlaufen.

9. Schneidelement nach einem der Ansprüche 1 - 8, dadurch **gekennzeichnet**, daß die Freiflächen (10, 11; 110, 111) des Schneidteils (4, 104) feinbearbeitet sind, d.h. eine zulässige Rauhtiefe von max. 0,1 µm aufweisen.

10. Spanneinrichtung zur Verwendung für eine Vorrichtung zum Zerspanen von Werkstücken aus Metall oder Kunststoff mit einem Schneidelement nach einem oder mehreren der Ansprüche 1 - 9, wobei die Vorrichtung im wesentlichen aus der zur Ausführung einer Rotationsbewegung gestalteten Spanneinrichtung und einem Antrieb zur Ausführung einer Drehbewegung der Spanneinrichtung um eine Rotationsachse besteht, dadurch **gekennzeichnet**, daß
- die Spanneinrichtung (200) zwei oder mehr Klemmbacken (201, 202) umfaßt, die das Schneidelement (1; 100) im Bereich des Klemmteils (2, 3; 102, 103) des Schneidelements (1; 100) spannen und
- das Schneidelement (1; 100) im gespannten Zustand in der Spanneinrichtung (200) so angeordnet ist, daß das Schneidteil (4, 104) des Schneidelements (1; 100) im Bereich einer in der Spanneinrichtung (200) vorgesehenen Öffnung (203) für die Aufnahme des zu bearbeitenden Werkstücks (300) angeordnet ist.

11. Spanneinrichtung nach Anspruch 10, dadurch **gekennzeichnet**, daß die Spanneinrichtung (200) auf beiden Seiten im Bereich ihrer Rotationsache (R) jeweils eine Öffnung (211, 212) für die Aufnahme des/der zu bearbeitenden Werkstücks/Werkstücke aufweist.

12. Spanneinrichtung nach Anspruch 11, dadurch **gekennzeichnet**, daß die Öffnung (211, 212) trichterfömig ist.

13. Spanneinrichtung nach einem der Ansprüche 11 oder 12, dadurch **gekennzeichnet**, daß die Form der Öffnung (211, 212) der Negativ-Form des zu bearbeitenden Werkstücks entspricht.

14. Spanneinrichtung nach einem der Ansprüche 10 - 13, dadurch **gekennzeichet**, daß im Bereich der Öffnung (203, 204) zusätzliche Bohrungen (206, 207) zur Abfuhr der bei der Bearbeitung des Werkstücks (300) entstehenden Späne vorgesehen sind.

## Claims

1. Cutting element for a chucking device, in particular for the removal of chips from metallic or plastic workpieces, consisting of an elongate body with
- at least one cutting part having at least one main cutting edge, the cutting part comprising at least one rake and at least one flank, and the main cutting edge of the cutting part being formed in each case at the edge by rakes and flanks contiguous to one another, and
- at least one clamping part, connected in one piece to the cutting part, for chucking the cutting element in the chucking device,
characterized in that
- the rake (12, 13; 112; 113) of the cutting part (4; 104) is formed by a face of an essentially arcuate recess (8, 9; 108, 109) provided in at least one side face (14, 15; 114, 115) of the cutting element (1, 100), and
- the flank (10, 11; 110, 111) of the cutting part (4, 104) is inclined downwards from the respective main cutting edge (16, 17, 18, 19; 116, 117) by an angle (δ) which is dependent on the material to be machined and which is at least approximately 2° to approximately 4°.

2. Cutting element according to Claim 1, characterized in that the arcuate recesses (8, 9; 108, 109) cover the entire profile cross section of the cutting part (4; 104).

3. Cutting element according to Claim 1, characterized in that the arcuate recesses (108, 109) cover a portion of the profile cross section of the cutting part (104).

4. Cutting element according to one of Claims 1 - 3, characterized in that the cutting part (4; 104) has two arcuate recesses (8, 9; 108, 109) located opposite one another.

5. Cutting element according to one of Claims 1 - 4, characterized in that the arcuate recesses (8, 9, 108, 109) are arranged so as to be offset to one another.

6. Cutting element according to Claim 5, characterized in that the main cutting edges (16, 17, 18, 19) are arranged at an equal distance from the centre of gravity (S) of the cutting element (1, 100).

7. Cutting element according to Claim 6, characterized in that the recesses (8, 9; 108, 109) are arranged point-symmetrically to the centre of gravity (S) of the cutting element (1; 100).

8. Cutting element essentially according to Claims 1, 6 and 7, characterized in that the flanks (10, 11) have an arcuate or planar shape.

9. Cutting element according to one of Claims 1 - 8, characterized in that the flanks (10, 11; 110, 111) of the cutting part (4, 104) are precision-machined, that is to say have a permissible peak-to-valley height of max. 0.1 µm.

10. Chucking device to be used for an appliance for the removal of chips from metallic or plastic work pieces, with a cutting element according to one or more of Claims 1 - 9, the appliance consisting essentially of the chucking device designed to execute a rotational movement and of a drive for executing a rotational movement of the chucking device about an axis of rotation, characterized in that
- the chucking device (200) comprises two or more clamping jaws (201, 202) which chuck the cutting element (1; 100) in the region of the clamping part (2, 3; 102, 103) of the cutting element (1; 100), and
- the cutting element (1; 100), in the chucked state, is arranged in the chucking device (200) in such a way that the cutting part (4, 104) of the cutting element (1; 100) is arranged in the region of an orifice (203), provided in the chucking device (200), for receiving the workpiece (300) to be machined.

11. Chucking device according to Claim 10, characterized in that the chucking device (200) has on each of the two sides, in the region of its axis of rotation (R), an orifice (211, 212) for receiving the workpiece/workpieces to be machined.

12. Chucking device according to Claim 11, characterized in that the orifice (211, 212) is funnel-shaped.

13. Chucking device according to one of Claims 11 or 12, characterized in that the shape of the orifice (211, 212) corresponds to the negative shape of the workpiece to be machined.

14. Chucking device according to one of Claims 10 - 13, characterized in that additional bores (206, 207) for discharging the chips occurring during the machining of the workpiece (300) are provided in the region of the orifice (203, 204).

## Revendications

1. Elément de coupe pour un dispositif de serrage, en particulier pour l'usinage de pièces à usiner en métal ou en matière synthétique, constitué d'un corps oblong avec
- au moins une partie de coupe avec au moins une arête vive principale, la partie de coupe comprenant au moins une face de coupe et au moins une face libre et l'arête vive principale de la partie de coupe étant formée respectivement à l'arête de faces de coupe et de faces libres adjacentes entre elles et
- au moins une partie de serrage, reliée d'une seule pièce à la partie de coupe, pour serrer l'élément de coupe dans le dispositif de serrage,
caractérisé en ce que
- la face de coupe (12,13 ; 112,113) de la partie de coupe (4 ; 104) est formée par une surface d'un évidement (8,9 ; 108,109) essentiellement en forme d'arc ménagé dans au moins une face latérale (14,15 ; 114,115) de l'élément de coupe (1 ; 100) et
- la face libre (10,11 ; 110,111) de la partie de coupe (4 ; 104) est inclinée vers le bas, par rapport à l'arête vive principale (16,17,18,19 ; 116,117) respective d'un angle (δ) dépendant du matériau à usiner et d'au moins environ 2° jusqu'à environ 4°.

2. Elément de coupe selon la revendication 1,
caractérisé en ce que les évidements (8,9 ; 108,109) en forme d'arc comprennent la section transversale de profil totale de la partie de coupe (4 ; 104).

3. Elément de coupe selon la revendication 1,
caractérisé en ce que les évidements (108,109) en forme d'arc comprennent une partie de la section transversale de profil de la partie de coupe (104).

4. Elément de coupe selon l'une des revendications 1-3,
caractérisé en ce que la partie de coupe (4 ; 104) présente deux évidements (8,9 ; 108,109) en forme d'arc opposés l'un à l'autre.

5. Elément de coupe selon l'une des revendications 1-4,
caractérisé en ce que les évidements (8,9 ; 108,109) en forme d'arc sont disposés décalés les uns par rapport aux autres.

6. Elément de coupe selon la revendication 5,
caractérisé en ce que les arêtes vives principales (16,17,18,19) sont disposées à même distance du centre de gravité (S) de l'élément de coupe (1 ; 100).

7. Elément de coupe selon la revendication 6,
caractérisé en ce que les évidements (8,9 ; 108,109) sont disposés à symétrie ponctuelle par rapport au centre de gravité (S) de l'élément de coupe (1 ; 100).

8. Elément de coupe essentiellement selon les revendications 1, 6 et 7,
caractérisé en ce que les faces libres (10,11) s'étendent en forme d'arc ou plane.

9. Elément de coupe selon l'une des revendications 1-8,
caractérisé en ce que les faces libres (10,11 ; 110,111) de la partie de coupe (4 ; 104) sont à traitement de finition, c'est-à-dire présentent une profondeur de rugosité tolérée d'au maximum 0,1 µm.

10. Dispositif de serrage pour l'utilisation pour un dispositif d'usinage de pièces à usiner en métal ou en matière synthétique avec un élément de coupe selon une ou plusieurs des revendications 1-9, le dispositif consistant essentiellement en un dispositif de serrage agencé pour effectuer un déplacement de rotation et une commande pour effectuer un déplacement de rotation, autour d'un axe de rotation, du dispositif de serrage,
caractérisé en ce que
- le dispositif de serrage (200) comprend deux mâchoires de serrage (201,202) ou plus qui serrent l'élément de coupe (1 ; 100) dans la zone de la partie de serrage (2,3 ; 102,103) de l'élément de coupe (1 ; 100) et
- l'élément de coupe (1 ; 100) est disposé, à l'état serré, dans le dispositif de serrage (200) de telle manière que la partie de coupe (4 ; 104) de l'élément de coupe (1 ; 100) est disposée dans la zone d'une ouverture (203) ménagée dans le dispositif de serrage (200) pour recevoir la pièce à usiner (300).

11. Dispositif de serrage selon la revendication 10,
caractérisé en ce que le dispositif de serrage (200) présente, des deux côtés, dans la région de son axe de rotation (R), respectivement une ouverture (211,212) pour recevoir la/les pièce à usiner/pièces à usiner.

12. Dispositif de serrage selon la revendication 11,
caractérisé en ce que l'ouverture (211,212) est en forme d'entonnoir.

13. Dispositif de serrage selon l'une des revendications 11 et 12,
caractérisé en ce que la forme de l'ouverture (211,212) correspond à la forme négative de la pièce à usiner.

14. Dispositif de serrage selon l'une des revendications 10-13,
caractérisé en ce que des alésages (206,207) supplémentaires pour l'évacuation des copeaux produits lors de l'usinage de la pièce à usiner (300) sont disposés dans la région de l'ouverture (203,204).
